(19) Europäisches Patentamt
European Patent Office
Office européen des brevets

(11) **EP 2 358 574 B1**

(12) **EUROPÄISCHE PATENTSCHRIFT**

(45) Veröffentlichungstag und Bekanntmachung des Hinweises auf die Patenterteilung:
**25.05.2016   Patentblatt 2016/21**

(21) Anmeldenummer: **09783399.0**

(22) Anmeldetag: **25.09.2009**

(51) Int Cl.:
**B60T 8/17** *(2006.01)*        **B60T 8/172** *(2006.01)*

(86) Internationale Anmeldenummer:
**PCT/EP2009/062418**

(87) Internationale Veröffentlichungsnummer:
**WO 2010/054887 (20.05.2010 Gazette 2010/20)**

(54) **VERFAHREN UND VORRICHTUNG ZUM BESTIMMEN DES SCHRÄGLAGEWINKELS EINES ZWEIRADFAHRZEUGS**

METHOD AND DEVICE FOR DETERMINING THE ANGLE OF INCLINATION OF A TWO-WHEELED VEHICLE

PROCÉDÉ ET DISPOSITIF DE DÉTERMINATION DE L'ANGLE D'INCLINAISON D'UN VÉHICULE À DEUX ROUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.11.2008   DE 102008043794**

(43) Veröffentlichungstag der Anmeldung:
**24.08.2011   Patentblatt 2011/34**

(73) Patentinhaber: **Robert Bosch GmbH**
**70442 Stuttgart (DE)**

(72) Erfinder:
• **NIEWELS, Frank**
**71634 Ludwigsburg (DE)**
• **LEMEJDA, Markus**
**71642 Ludwigsburg (DE)**

(56) Entgegenhaltungen:
**WO-A-02/01151        DE-A1- 10 039 978**
**DE-A1-102006 061 483**

**Beschreibung**

Stand der Technik

Die Erfindung betrifft ein Verfahren zum Bestimmen des Schräglagewinkels eines Zweiradfahrzeugs gemäß dem Oberbegriff des Patentanspruchs 1, sowie eine entsprechende Vorrichtung gemäß dem Oberbegriff des Patentanspruchs 7.

Beim Durchfahren einer Kurve mit einem Zweiradfahrzeug von der Art eines Fahrrades, Rollers oder Kraftrades wandert der Reifenaufstandspunkt von der Mitte des Reifenmantels in Richtung zur Seite. Der Abstand des Reifenaufstandspunktes zur Reifenmittelebene ist insbesondere beim Bremsen und Beschleunigen in der Kurve eine wichtige Größe, da dieser Abstand in Verbindung mit der in Fahrzeuglängsrichtung wirkenden Brems- oder Beschleunigungskraft ein Drehmoment um die z-Achse (Hochachse) bewirkt, der sich auf die Lenkung überträgt.

Aus der EP 370469 oder der EP 0943517 sind verschiedene Verfahren bekannt, den Schräglagenwinkel eines Zweirades gegen die Fahrbahn zu bestimmen. Diese Verfahren sind aber für eine serienreife Anwendung eher nicht praktikabel.

Aus der DE 10 2006 061 483 A1 ist ein Verfahren zur Bestimmung des Rollwinkels eines Kraftfahrzeugs bekannt. Bei diesem Verfahren wird, insbesondere durch Addition, von zwei Rollwinkelgrößen der Rollwinkel ermittelt.

Die WO 02/01151 A lehrt die Ermittlung des Rollwinkels eines zweirädrigen Fahrzeugs, wobei der Rollwinkel relativ zum Gravitationsfeld gemessen wird.

Die DE 100 39 978 A1 beschreibt eine Vorrichtung, die es ermöglicht, den Neigungswinkel von Fahrzeugen und Zweirädern unabhängig von einer Quer- oder Vertikalbeschleunigung zu messen.

Die Merkmale der Oberbegriffe der unabhängigen Ansprüche sind der DE 10 2006 061 483 A1 entnommen.

Offenbarung der Erfindung

Es ist die Aufgabe der vorliegenden Erfindung, ein Verfahren und eine Vorrichtung zu schaffen, die es ermöglichen, den Schräglagenwinkel eines Zweirades gegen die Fahrbahn in einfacher Weise und kostengünstig zu bestimmen.

Gelöst wird diese Aufgabe gemäß der Erfindung durch die im Patentanspruch 1, sowie im Patentanspruch 7 angegebenen Merkmale. Weitere Ausgestaltungen der Erfindung sind Gegenstand von Unteransprüchen.

Ein wesentlicher Aspekt der Erfindung besteht darin, den Schräglagenwinkel aus der Querbeschleunigung und der Beschleunigung in Richtung der Hochachse (z-Achse) des Fahrzeugs zu berechnen. Unter der Bezeichnung "Schrägtagenwinke!" soll dabei der Winkel zwischen der Fahrzeug-Hochachse und der Fahrbahn, sowie außerdem jeder Winkel verstanden werden, aus dem sich ein solcher Winkel berechnen lässt, wie z. B. der Winkel der Fahrzeug-Hochachse gegen die Fahrbahnnormale. Die Querbeschleunigung $a_y$ wird vorzugsweise mittels eines Querbeschleunigungssensors direkt gemessen. Die Beschleunigung in Richtung der Hochachse kann entweder auch mittels eines Beschleunigungssensors gemessen oder aus den Sensorsignalen eines oder mehrerer anderer Sensoren, wie beispielsweise eines Gierraten- und Geschwindigkeitssensors berechnet werden. Der Schräglagenwinkel eines Zweirades gegen die Fahrbahn kann somit sehr einfach bestimmt werden.

Dabei wird der Schräglagenwinkel β aus den beiden Beschleunigungswerten $a_y$, $a_z$ und einer geometrischen Beziehung berechnet, die den Verlauf der Reifengeometrie in Querrichtung beschreibt. Näherungsweise kann für die Reifengeometrie z. B. ein Kreissegment angenommen werden. In diesem Fall ließe sich die Reifengeometrie mit einem Radius r beschreiben.

Eine erfindungsgemäße Vorrichtung zum Bestimmen des Schräglagenwinkels β eines Zweirads umfasst wenigstens einen Querbeschleunigungssensor und eine Einrichtung zum Bestimmen der Beschleunigung $a_z$ in Richtung der Hochachse des Fahrzeugs, sowie eine Einrichtung, wie z.B. ein Steuergerät, zum Berechnen des Schräglagenwinkels auf Basis der Beschleunigungswerte $a_y$, $a_z$ und ggf. weiterer Größen.

Die Erfindung wird nachstehend anhand der beigefügten Zeichnungen beispielhaft näher erläutert. Es zeigen:

Figur 1 eine Darstellung verschiedener geometrischer Größen und Beschleunigungen, die während einer Kurvenfahrt eines Zweirades auftreten; und

Figur 2 ein schematisches Blockschaltbild einer Vorrichtung zum Bestimmen des Schräglagenwinkels eines Zweirades gegenüber der Fahrbahnnormale.

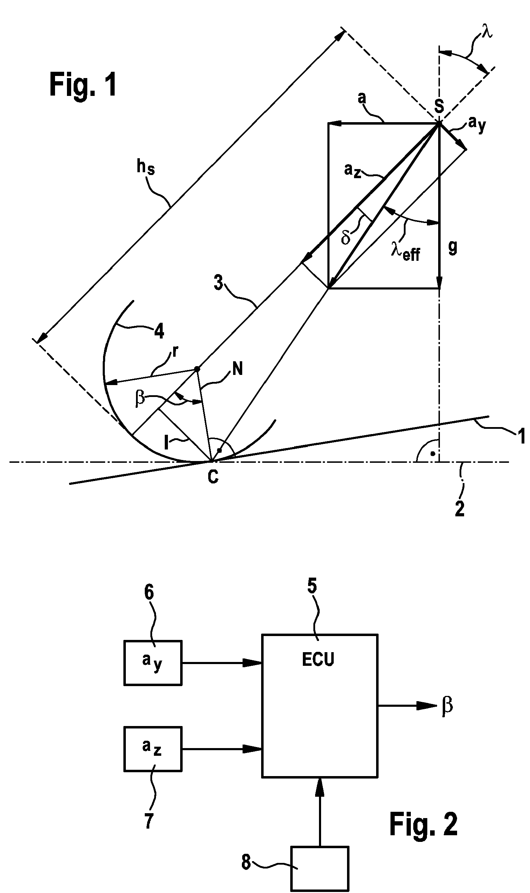

Figur 1 zeigt verschiedene geometrische Größen und Beschleunigungen, die bei einer Kurvenfahrt eines Zweirades auftreten. Dabei bezeichnet das Bezugszeichen 4 den Reifenmantel, C den Reifenaufstandspunkt auf der Fahrbahnoberfläche 1, und 2 einen virtuellen Horizont. Der Schräglagenwinkel des Fahrzeugs gegen die Fahrbahnnormale N ist mit β bezeichnet. Der Verlauf des Reifen-Querschnittsprofils ist hier vereinfacht als Kreissegment mit einem Radius r angenommen. Der Abstand I des Reifenaufstandspunktes C zur Reifen- bzw. Fahrzeug-Mittelebene 3 ist mit I bezeichnet.

Das Fahrzeug hat einen Schwerpunkt S mit einer Schwerpunktshöhe $h_s$ in Richtung der Hochachse (z-Achse) des Fahrzeugs. Während der Kurvenfahrt wirken Beschleunigungen $a_y$ in Querrichtung (y-Richtung) und $a_z$ in Richtung der Hochachse z. Die Erdbeschleunigung ist mit g bezeichnet. Der Pfeil a gibt die Beschleunigung in Richtung des virtuellen Horizonts 2 an.

Der Schräglagenwinkel $\lambda$ gegen Erdlot setzt sich zusammen aus dem effektiven Schräglagenwinkels $\lambda_{eff}$ zwischen Erdlot g und einer durch den RadAufstandspunkt C und den Schwerpunkt S verlaufenden Gerade, und einem Winkel $\delta$ zwischen dieser Gerade und der Fahrzeugmittelebene 3. Es gilt somit

$$\lambda = \lambda_{eff} + \delta.$$

Der gesuchte Schräglagenwinkel $\beta$ des Fahrzeugs gegen die Fahrbahnnormale kann nun wie folgt abgeschätzt werden:

$$\beta = \arcsin\left(\frac{I}{r}\right)$$

Hierbei wurde ein kreisbogenförmiger Profilquerschnitt mit Radius r zugrunde gelegt. Für andere Reifen-Querschnittsgeometrien kann der Zusammenhang zwischen I und $\beta$ entsprechend angepasst werden.

Der Abstand I kann dabei wie folgt berechnet werden: Für den zusätzlichen Schräglagenwinkel $\delta$ gilt zunächst:

$$\tan \delta = \frac{a_y}{a_z}$$

Zwischen $\delta$ und dem seitlichen Versatz I des Reifenaufstandspunktes C besteht gemäß Figur 1 der Zusammenhang:

$$\tan \delta = \frac{I}{h_S - r + \sqrt{r^2 - I^2}}$$

Bleibt I klein gegen $h_S$, lässt sich I wie folgt nähern:

$$I \approx h_S \tan\delta = h_S \frac{a_y}{a_z}$$

Zusammenfassend läßt sich der Schräglagenwinkel $\beta$ des Fahrzeugs gegen die Fahrbahnnormale wie folgt aus den Beschleunigungen $a_y$ und $a_z$ abschätzen:

$$\beta = \arcsin(h_S/r * ay/az)$$

Der Wert der Querbeschleunigung $a_y$ wird direkt mittels eines Querbeschleunigungssensors 6 (siehe Figur 2) gemessen. Der Wert $a_z$ für die Beschleunigung in Richtung der Hochachse z des Fahrzeugs kann ebenfalls direkt gemessen oder wahlweise auch z. B. gemäß der Methode der DE 10235378 A1 aus dem Signal eines Gierratensensors und der Fahrzeuglängsgeschwindigkeit berechnet werden. Dabei wird aus den Sensorsignalen zunächst ein Schräglagenwinkel $\lambda$ und dann aus dem Schräglagenwinkel $\lambda$ die Beschleunigung $a_z$ berechnet:

$$a_z \approx \sqrt{g^2 + a^2} = g\sqrt{1 + \tan^2 \lambda_{eff}} \approx g\sqrt{1 + \tan^2 \lambda}$$

Dies gilt für kleine Winkel δ, also $\lambda_{eff} \approx \lambda$.

Dieses Verfahren zur Berechnung des Schräglagenwinkels ist jedoch nur für stationäre Zustände gültig, in denen sich der Schräglagenwinkel nicht oder nur sehr geringfügig ändert. Um einen solchen stationären Zustand zu erkennen, können z. B. ein oder mehrere, in verschiedenen Raumrichtungen angeordnete, Drehraten- und Beschleunigungssensoren verwendet werden. Eine solche Zusatzsensorik kann auch dazu benutzt werden, die Einflüsse eines sich ändernden Schräglagenwinkels β auf die Beschleunigungssignale $a_y$ und $a_z$ zu kompensieren.

Figur 2 zeigt eine Vorrichtung zum Bestimmen des Schräglagenwinkels eines Zweirades gegen die Fahrbahnnormale N. Im vorliegenden Ausführungsbeispiel werden die Beschleunigungswerte $a_y$ und $a_z$ mittels entsprechender Beschleunigungssensoren 6, 7 gemessen. Die einzelnen Sensorsignale werden einem Steuergerät 5 zugeführt, das auf Basis der Sensorsignale gemäß obiger Gleichung den Schräglagenwinkel β gegenüber der Fahrbahnnormale N berechnet. Zusätzlich können ein oder mehrere weitere Sensoren 8 zur Erkennung und Berücksichtigung von Störgrößen und damit zur Steigerung der Genauigkeit verwendet werden. So können beispielsweise Gewichts-, Federwegs- oder optische Sensoren eingesetzt werden, um zusätzliche Informationen über die Position oder Bewegung des Zweirades zu ermitteln.

**Patentansprüche**

1.  Verfahren zum Bestimmen des Schräglagenwinkels (β) eines Zweiradfahrzeugs, wobei

    - die Querbeschleunigung ($a_y$) und die Beschleunigung ($a_z$) in Richtung der Hochachse (z) des Fahrzeugs ermittelt und
    - der Schräglagenwinkel (β) des Zweiradfahrzeugs gegenüber der Fahrbahn (1) oder der Fahrbahnnormale (N) auf Basis der beiden Beschleunigungswerte ($a_y$, $a_z$) berechnet wird,

    **dadurch gekennzeichnet, dass** der Schräglagenwinkel (β) gemäß

    $$\beta = \arcsin(l/r)$$

    berechnet wird, wobei l der Abstand des Reifenaufstandspunkts (C) von der Reifenmittelebene (3) und r ein Profilradius ist und der Abstand l des Reifenaufstandspunktes (C) zur Reifenmittelebene (3) gemäß:

    $$l = h_S \frac{a_y}{a_z}$$

    berechnet wird, wobei $h_S$ die Schwerpunkthöhe ist.

2.  Verfahren nach Anspruch 1, **dadurch gekennzeichnet, dass** die Beschleunigung ($a_z$) in Richtung der Hochachse (z) direkt mittels eines Beschleunigungssensors (7) gemessen oder aus den Sensorsignalen eines oder mehrerer anderer Sensoren berechnet wird.

3.  Verfahren nach Anspruch 1 oder 2, **dadurch gekennzeichnet, dass** der Schräglagenwinkel (β) auf Basis der beiden Beschleunigungswerte ($a_y$, $a_z$) und einer geometrischen Größe (r) berechnet wird, die den Verlauf des Reifenprofils in Querrichtung beschreibt.

4.  Verfahren nach einem der vorhergehenden Ansprüche, **dadurch gekennzeichnet, dass** aus den beiden Beschleunigungswerten ($a_y$, $a_z$) eine geometrische Größe (l) berechnet wird, die den Abstand des Reifenaufstandspunktes (C) von einer Reifenmittelebene (3) angibt.

5.  Verfahren nach einem der vorhergehenden Ansprüche, **dadurch gekennzeichnet, dass** die Beschleunigung ($a_z$) in Richtung der Hochachse (z) aus dem Signal eines Gierraten- und eines Geschwindigkeitssensors berechnet wird.

6. Verfahren nach einem der vorhergehenden Ansprüche, **dadurch gekennzeichnet, dass** der Schräglagenwinkel ($\beta$) eines Fahrzeugs gegenüber der Fahrbahnnormalen (N) bestimmt wird.

7. Vorrichtung zum Bestimmen des Schräglagenwinkels ($\beta$) eines Fahrzeugs, enthaltend

   - eine Einrichtung (6) zum Bestimmen der Querbeschleunigung ($a_y$),
   - eine Einrichtung (7) zum Bestimmen der Beschleunigung ($a_z$) in Richtung der Hochachse (z) des Fahrzeugs, und
   - eine Verarbeitungseinrichtung (5), die auf Basis der beiden Beschleunigungswerte ($a_y$, $a_z$) den Schräglagenwinkel ($\beta$) des Zweiradfahrzeugs gegenüber der Fahrbahn (1) oder der Fahrbahnnormale (N) berechnet,

   **dadurch gekennzeichnet, dass** der Schräglagenwinkel ($\beta$) gemäß

$$\beta = \arcsin (l/r)$$

   berechnet wird, wobei l der Abstand des Reifenaufstandspunkts (C) von der Reifenmittelebene (3) und r ein Profilradius ist und der Abstand l des Reifenaufstandspunktes (C) zur Reifenmittelebene (3) gemäß:

$$l = h_S \frac{a_y}{a_z}$$

   berechnet wird, wobei $h_s$ die Schwerpunkthöhe ist.

8. Vorrichtung nach Anspruch 7, **dadurch gekennzeichnet, dass** die Einrichtung zum Bestimmen der Beschleunigung ($a_z$) in Richtung der Hochachse (z) ein Beschleunigungssensor ist.

9. Vorrichtung nach Anspruch 8, **dadurch gekennzeichnet, dass** die Einrichtung zum Bestimmen der Beschleunigung ($a_z$) in Richtung der Hochachse (z) einen Gierratensensor und/oder andere Sensoren umfasst, aus dessen Signalen die Beschleunigung ($a_z$) in Richtung der Hochachse berechnet wird.

10. Vorrichtung nach einem der vorhergehenden Ansprüchen, **dadurch gekennzeichnet, dass** weitere Sensorsignale zur Steigerung der Genauigkeit des Verfahrens verwendet werden.

**Claims**

1. Method for determining the banking angle ($\beta$) of a two-wheeled vehicle, wherein

   - the transverse acceleration ($a_y$) and the acceleration ($a_z$) in the direction of the vertical axis (z) of the vehicle are established and
   - the banking angle ($\beta$) of the two-wheeled vehicle in relation to the roadway (1) or the normal (N) of the roadway is calculated on the basis of the two acceleration values ($a_y$, $a_z$),

   **characterized in that** the banking angle ($\beta$) is calculated according to

$$\beta = \arcsin (I/r),$$

   where I denotes the distance of the tyre contact point (C) from the central plane of the tyre (3) and r is a profile radius and the distance I of the tyre contact point (C) to the central plane of the tyre (3) is calculated according to:

$$I = h_S \frac{a_y}{a_z},$$

where $h_s$ is the centre-of-gravity height.

2. Method according to Claim 1, **characterized in that** the acceleration ($a_z$) in the direction of the vertical axis (z) is measured directly by means of an acceleration sensor (7) or calculated from the sensor signals of one or more other sensors.

3. Method according to Claim 1 or 2, **characterized in that** the banking angle ($\beta$) is calculated on the basis of the two acceleration values ($a_y$, $a_z$) and a geometric variable (r), which describes the course of the tyre profile in the transverse direction.

4. Method according to one of the preceding claims, **characterized in that** a geometric variable (I) which specifies the distance of the tyre contact point (C) from a central plane of the tyre (3) is calculated from the two acceleration values ($a_y$, $a_z$).

5. Method according to one of the preceding claims, **characterized in that** the acceleration ($a_z$) in the direction of the vertical axis (z) is calculated from the signal of a yaw-rate sensor and a velocity sensor.

6. Method according to one of the preceding claims, **characterized in that** the banking angle ($\beta$) of a vehicle is determined in relation to the normal (N) of the roadway.

7. Device for determining the banking angle ($\beta$) of a vehicle, containing

   - an apparatus (6) for determining the transverse acceleration ($a_y$),
   - an apparatus (7) for determining the acceleration ($a_z$) in the direction of the vertical axis (z) of the vehicle, and
   - a processing apparatus (5) which calculates the banking angle ($\beta$) of the two-wheeled vehicle in relation to the roadway (1) or the normal (N) of the roadway on the basis of the two acceleration values ($a_y$, $a_z$),

   **characterized in that** the banking angle ($\beta$) is calculated according to

$$\beta = \arcsin (I/r),$$

   where I denotes the distance of the tyre contact point (C) from the central plane of the tyre (3) and r is a profile radius and the distance I of the tyre contact point (C) to the central plane of the tyre (3) is calculated according to:

$$I = h_s \frac{a_y}{a_z},$$

   where $h_s$ is the centre-of-gravity height.

8. Device according to Claim 7, **characterized in that** the apparatus for determining the acceleration ($a_z$) in the direction of the vertical axis (z) is an acceleration sensor.

9. Device according to Claim 8, **characterized in that** the apparatus for determining the acceleration ($a_z$) in the direction of the vertical axis (z) comprises a yaw-rate sensor and/or other sensors, from the signals of which the acceleration ($a_z$) in the direction of the vertical axis is calculated.

10. Device according to one of the preceding claims, **characterized in that** further sensor signals are used to increase the accuracy of the method.

**Revendications**

1. Procédé de détermination de l'angle d'inclinaison ($\beta$) d'un véhicule à deux roues, selon lequel

   - l'accélération transversale ($a_y$) et l'accélération ($a_z$) en direction de l'axe de hauteur (z) du véhicule sont déterminées et
- l'angle d'inclinaison ($\beta$) du véhicule à deux roues par rapport à la voie de circulation (1) ou la normale à la voie de circulation (N) est calculé en se basant sur les deux valeurs d'accélération ($a_y$, $a_z$),

**caractérisé en ce que** l'angle d'inclinaison ($\beta$) est calculé conformément à

$$\text{ß = arcsin (l/r),}$$

l désignant l'écart entre le point de contact du pneu (C) et le plan central du pneu (3) et r désignant un rayon de profil, et l'écart l entre le point de contact du pneu (C) et le plan central du pneu (3) étant calculé conformément à :

$$\text{l = h}_\text{s}\text{(a}_\text{y}\text{/a}_\text{z}\text{),}$$

$h_s$ désignant la hauteur du centre de gravité.

2.  Procédé selon la revendication 1, **caractérisé en ce que** l'accélération ($a_z$) en direction de l'axe de hauteur (z) est mesurée directement au moyen d'un capteur d'accélération (7) ou calculée à partir des signaux de capteur d'un ou plusieurs autres capteurs.

3.  Procédé selon la revendication 1 ou 2, **caractérisé en ce que** l'angle d'inclinaison ($\beta$) est calculé en se basant sur les deux valeurs d'accélération ($a_y$, $a_z$) et une grandeur géométrique (r) qui décrit le tracé du profil du pneu dans le sens transversal.

4.  Procédé selon l'une des revendications précédentes, **caractérisé en ce qu'**une grandeur géométrique (1) est calculée à partir des deux valeurs d'accélération ($a_y$, $a_z$), laquelle indique l'écart entre le point de contact du pneu (C) et un plan central du pneu (3).

5.  Procédé selon l'une des revendications précédentes, **caractérisé en ce que** l'accélération ($a_z$) en direction de l'axe de hauteur (z) est calculée à partir du signal d'un capteur de taux de lacet et d'un capteur de vitesse.

6.  Procédé selon l'une des revendications précédentes, **caractérisé en ce que** l'angle d'inclinaison ($\beta$) d'un véhicule est déterminé par rapport à la normale à la voie de circulation (N).

7.  Dispositif de détermination de l'angle d'inclinaison ($\beta$) d'un véhicule, comprenant

    - un appareil (6) servant à déterminer l'accélération transversale ($a_y$),
    - un appareil (7) servant à déterminer l'accélération ($a_z$) en direction de l'axe de hauteur (z) du véhicule, et
    - un appareil de traitement (5) qui calcule l'angle d'inclinaison ($\beta$) du véhicule à deux roues par rapport à la voie de circulation (1) ou la normale à la voie de circulation (N) en se basant sur les deux valeurs d'accélération ($a_y$, $a_z$),

    **caractérisé en ce que** l'angle d'inclinaison ($\beta$) est calculé conformément à

$$\text{ß = arcsin (l/r),}$$

l désignant l'écart entre le point de contact du pneu (C) et le plan central du pneu (3) et r désignant un rayon de profil, et l'écart l entre le point de contact du pneu (C) et le plan central du pneu (3) étant calculé conformément à :

$$\text{l = h}_\text{s}\text{(a}_\text{y}\text{/a}_\text{z}\text{),}$$

$h_s$ désignant la hauteur du centre de gravité.

8.  Dispositif selon la revendication 7, **caractérisé en ce que** l'appareil servant à déterminer l'accélération ($a_z$) en direction de l'axe de hauteur (z) est un capteur d'accélération.

9. Dispositif selon la revendication 8, **caractérisé en ce que** l'appareil servant à déterminer l'accélération ($a_z$) en direction de l'axe de hauteur (z) comprend un capteur de taux de lacet et/ou d'autres capteurs à partir des signaux desquels est calculée l'accélération ($a_z$) en direction de l'axe de hauteur.

10. Dispositif selon l'une des revendications précédentes, **caractérisé en ce que** des signaux de capteur supplémentaires sont utilisés pour augmenter la précision du procédé.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 370469 A
- EP 0943517 A
- DE 102006061483 A1
- WO 0201151 A
- DE 10039978 A1
- DE 10235378 A1